# EUROPÄISCHE PATENTSCHRIFT

(11) **EP 2 135 485 B1**
(45) Veröffentlichungstag und Bekanntmachung des Hinweises auf die Patenterteilung: **12.05.2010**
(21) Anmeldenummer: 08734444.6
(22) Anmeldetag: 27.03.2008
(51) Int. Cl.: H05B 6/40, H05B 6/02, C21D 1/10

(54) **INDUKTOR ZUM INDUKTIONSHÄRTEN VON METALLISCHEN, STABFÖRMIGEN ZAHNSTANGEN**
INDUCTOR FOR INDUCTOR HARDENING OF METAL, ROD-SHAPED TOOTHED RACKS
INDUCTEUR POUR LA TREMPE PAR INDUCTION DE CRÉMAILLÈRES MÉTALLIQUES EN FORME DE BARRE

(30) Priorität: 28.03.2007 DE 102007015314
(43) Veröffentlichungstag der Anmeldung: 23.12.2009
(73) Patentinhaber: EFD Induction GmbH, 79106 Freiburg (DE)
(72) Erfinder: MARKEGAARD, Leif, N-3727 Skien (NO)
(74) Vertreter: Goy, Wolfgang
(86) Internationale Anmeldenummer: PCT/DE2008/000515
(87) Internationale Veröffentlichungsnummer: WO 2008/116459

(56) Entgegenhaltungen:
- DE-B- 1 211 674
- DE-C1- 3 843 457
- DE-C1- 4 230 897
- JP-A- 6 264 147
- US-A- 2 390 559
- US-A- 3 842 234
- US-A- 5 428 208
- US-A- 5 473 960

## Beschreibung

Die Erfindung betrifft einen Induktor zum Induktionshärten von metallischen, stabförmigen Zahnstangen nach dem Oberbegriff des Anspruchs 1.

Der erfindungsgemäße Induktor ist für Zahnstangen gedacht, welche einen nicht runden Querschnitt aufweisen. Derartige Zahnstangen sind im Bereich der in Reihe hintereinander angeordneten Zähne im wesentlichen eben, während die restliche Querschnittskontur profiliert, beispielsweise rund oder im wesentlichen oval oder rechteckig oder trapezförmig ist.

Beim Induktionshärten von Zahnstangen ist es bisher bekannt, die Zahnstange stationär anzuordnen und einen steigbügelförmigen Induktor während des Induktionshärtens längs der Zahnstange zu verfahren. Dies ist insgesamt technisch aufwendig und vor allem aber auch von der Verfahrensdauer her zeitlich aufwendig.

Die DE 38 43 457 C1 zeigt eine Vorrichtung zum Oberflächenhärten von unterschiedlich langen Werkstücken der eingangs angegebenen Art. Bei diesen Werkstücken kann es sich beispielsweise um Zahnstangen handeln. Die Vorrichtung weist zwei stabförmige Induktoren auf, welche zur Anpassung an die jeweilige Werkstücklänge relativ zueinander verschiebbar sind. Die beiden diametral einander gegenüberliegenden Induktorstäbe sind dabei stationär angeordnet, während das zu härtende Werkstück gedreht wird.

Die US 5 473 960 (dort Fig. 15a und 15b) sowie die JP 06 26 4147 A (dort Fig. 5) zeigen eine Vorrichtung zum Härten von Zahnstangen. Dabei erstrecken sich zwei diametral einander gegenüberliegende Induktorstäbe längs der Zahnstange. Dabei wird die Zahnstange in eine Drehbewegung versetzt.

Der Erfindung liegt die **Aufgabe** zugrunde, einen verbesserten Induktor zum Induktionshärten von metallischen, stabförmigen Zahnstangen der eingangs angegebenen Art zu schaffen, mittels dem der Induktionsvorgang einfacher und schneller durchgeführt werden kann.

Die technische **Lösung** ist gekennzeichnet durch die Merkmale im Kennzeichen des Anspruchs 1.

Die Grundidee des erfindungsgemäßen Induktors zum Induktionshärten von metallischen, länglichen Zahnstangen, welche eine bestimmte Querschnittsprofilierung aufweisen, besteht darin, den Induktor entsprechend der vorgegebenen Kontur der zu härtenden Zahnstange aus wenigstens einem Induktorelement zu bilden, vorzugsweise aus mehreren Einzel-Induktorelementen zu bilden. Darunter ist zu verstehen, daß der Zahnseite der zu härtenden Zahnstange ein Induktorelement zugeordnet ist. Sofern dieses Induktorelement aus mehreren einzelnen Induktorelementen gebildet ist, definiert die Summe den Gesamtinduktor. Indem die Induktorelemente in Längsrichtung der länglichen Zahnstange angeordnet und ausgerichtet sind, läßt sich der Induktor derart gestalten, daß er sich über die gesamte Länge der zu härtenden, länglichen Zahnstange erstreckt. Auf diese Weise ist es möglich, die Zahnstange trotz einer komplizierten Formgebung gezielt in einem einzigen Arbeitsgang zu härten. Insbesondere ist es durch die erfindungsgemäße Ausbildung des Induktors möglich, erfindungsgemäß sowohl den Induktor als auch die Zahnstange stationär anzuordnen, so daß mit einer einzigen Strombeaufschlagung entweder nur die Zahnseite der Zahnstange oder aber die komplette Zahnstange (also einschließlich der Rückseite) gehärtet werden kann, ohne daß eine Relativbewegung zwischen der Zahnstange und dem Induktor notwendig ist. Von der Verfahrensweise her können die bekannten Techniken angewendet werden. So können die bekannten, üblichen Verfahrensschritte durchgeführt werden, wie beispielsweise Vorhärten und anschließend das eigentliche Härten. Beispielsweise ist es auch möglich, den Induktor mit einer oder mit mehreren Frequenzen zu betreiben. Insgesamt wird durch den erfindungsgemäßen Induktor zum einen die Qualität der induktionsgehärteten Zahnstange verbessert, zum anderen läßt sich dadurch die Verfahrensdauer verkürzen.

Gemäß der Weiterbildung in Anspruch 2 kann der Zahnseite der Zahnstange beispielsweise ein Paar von stabförmigen Induktorelementen zugeordnet sein. Durch eine entsprechende geometrische Ausbildung und Anordnung der stabförmigen Induktorelemente läßt sich somit eine optimale Härtung der Zahnseite der Zahnstange erzielen.

Die Weiterbildung gemäß Anspruch 3 schlägt vor, nicht nur die Zahnseite der Zahnstange auf die vorbeschriebene Art und Weise induktiv zu härten, sondern auch die Rückseite der Zahnstange. Darunter ist zu verstehen, daß sich im Bereich dieser Rückseite der Zahnstange entsprechende stabförmige sowie parallel zur Längsachse der Zahnstange sich erstrekkende Induktorelemente befinden, welche die Rückseite der Zahnstange härten. Auch hier wird somit mit einer einzigen Strombeaufschlagung die Rückseite, und damit die komplette Zahnstange gehärtet, also sowohl die Zahnseite als auch die Rückseite der Zahnstange. Die Strombeaufschlagung der Induktorelemente erfolgt dabei vorzugsweise gleichzeitig.

Die Weiterbildung gemäß Anspruch 4 schlägt auch hier vor, daß auch bei der Härtung der Rückseite Induktorelementen-Paare vorgesehen sind, wenn beispielsweise die Rückseite der Zahnstange im Querschnittsprofil rund oder oval ausgebildet ist. Je nach der Querschnittskontur können auch noch mehr Induktoren vorgesehen sein, wobei jedem Konturabschnitt ein eigenes, stabförmiges Induktorelement zugeordnet ist. Durch diese entsprechende geometrische Ausbildung und Anordnung der stabförmigen Induktorelemente läßt sich eine optimale Härtung der gesamten Zahnstange erzielen.

Die Weiterbildung gemäß Anspruch 5 schlägt vor, daß der Induktor in seiner Gesamtheit eine in sich mechanisch starre Baueinheit bildet. Dies bedeutet, daß der Induktor mit seinen Induktorelementen in dieser baulichen Gesamtheit zunächst bezüglich der zu härtenden Zahnstange positioniert werden muß, um anschließend den Härtevorgang mit der entsprechenden Strombeaufschlagung des Induktors durchzuführen. Die Verbindungselemente zwischen den einzelnen Induktorelementen haben dabei nicht nur die Aufgabe, eine mechanische Verbindung zu schaffen, sondern vorzugsweise bilden diese Verbindungselemente auch die elektrische Verbindung zwischen den Induktorelementen, sei es in einer Reihenschaltung oder sei es in einer Parallelschaltung.

Dabei sind gemäß der Weiterbildung in Anspruch 6 die Verbindungselemente zwischen einander benachbarten Induktorelementen angeordnet. Dies bedeutet, daß der Gesamtinduktor insgesamt sehr kompakt, insbesondere bei der länglichen Zahnstange darüber hinaus schlank ausgebildet ist und daß vor allem keine unnötigen Leiterwege überbrückt werden müssen. Durch die querverlaufenden Verbindungselemente fließt der Strom entsprechend den Induktorelementen in Längsichtung der Zahnstange gesehen im Induktor hin und her, d. h. vor und wieder zurück und wieder vor etc.

Eine weitere Weiterbildung schlägt gemäß Anspruch 7 vor, daß die Induktorelemente durch entsprechende Verbindungselemente elektrisch in Reihe geschaltet sind. Entsprechend dem Verlauf und der Anordnung der Induktorelemente und der Verbindungselemente ergibt sich ein in sich verschlungener Gesamtinduktor, welcher an die Kontur des zu härtenden Zahnstanges angepaßt ist. Alternativ ist es auch möglich, daß die Induktorelemente elektrisch parallel geschaltet sind. Zum einen ist es hier denkbar, daß die Induktorelemente an die gleiche Spannungsquelle angeschlossen sind. Es ist zum anderen aber auch denkbar, daß die Induktorelemente unterschiedlich angesteuert werden.

Ein Ausführungsbeispiel eines erfindungsgemäßen Induktors zum Induktionshärten von metallischen Zahnstangen wird nachfolgend anhand der Zeichnung beschrieben. In dieser zeigt:
- Fig. 1: eine Ansicht des Induktors zum Härten von Zahnstangen;
- Fig. 2: eine Seitenansicht des Induktors in Fig. 1;
- Fig. 3: eine Rückansicht des Induktors in Fig. 1;
- Fig. 4: eine Ansicht in Längsrichtung der Zahnstange.

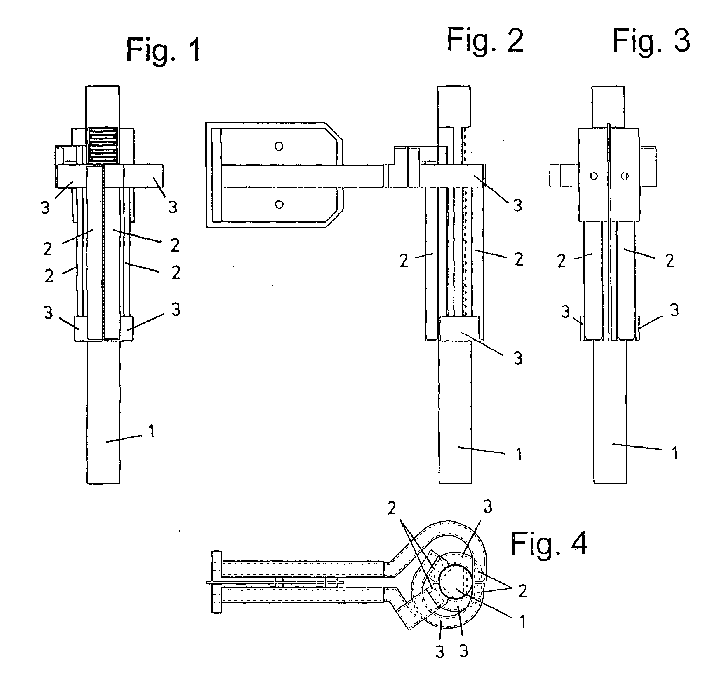

Die Ausführungsform in den Fig. 1 bis 4 zeigt einen Induktor zum Härten einer Zahnstange 1. Der Induktor besteht aus insgesamt vier länglichen Induktorelementen 2, welche sich parallel zur Zahnstange 1 erstrecken. Dabei befinden sich zwei Induktorelemente 2 gegenüberliegend dem Zahnprofil der Zahnstange 1, während zwei Induktorelemente 2 sich im Bereich der Rückseite der Zahnstange 1 erstrecken.

Einander benachbarte Enden der Induktorelemente 2 sind durch Verbindungselemente 3 sowohl mechanisch als auch elektrisch miteinander verbunden. Dies bedeutet, daß die Induktorelemente 2 zusammen mit ihren Verbindungselementen 3 elektrisch in Reihe geschaltet sind, wobei der Strom längs der Induktorelemente 2 nach Passieren der jeweiligen Verbindungselemente 3 in Längsrichtung der Zahnstange 1 gesehen hin und her fließt.

### Bezugszeichenliste

- 1: Zahnstange
- 2: Induktorelement
- 3: Verbindungselement

## Patentansprüche

1. Induktor zum Induktionshärten von metallischen, stabförmigen Zahnstangen (1), wobei die Mantelfläche der Zahnstange (1) im Bereich der Zähne im wesentlichen eben und die restliche Mantelfläche der Zahnstange (1) im Querschnitt profiliert ist und wobei der Induktor durch wenigstens ein, im wesentlichen stabförmiges sowie parallel zur Längsachse der Zahnstange (1) sich erstreckendes Induktorelement (2) gebildet ist, welches sich über die gesamte Länge der zu härtenden Zahnstange (1) längs der Mantelfläche mit den Zähnen erstreckt und diesen vorgegebenen Oberflächenbereich der Zahnstange (1) härtet,
**dadurch gekennzeichnet,**
**daß** sowohl die Zahnstange (1) als auch der Induktor während des Härtevorganges stationär angeordnet sind.

2. Induktor nach dem vorhergehenden Anspruch,
**dadurch gekennzeichnet,**
**daß** der Mantelfläche der Zahnstange (1) mit den Zähnen zwei oder mehr, zueinander parallele Induktorelemente (2) zugeordnet sind.

3. Induktor nach einem der vorhergehenden Ansprüche,
**dadurch gekennzeichnet,**
**daß** der Induktor durch wenigstens ein weiteres, im wesentlichen stabförmiges sowie parallel zur Längsachse der Zahnstange (1) sich erstreckendes Induktorelement (2) gebildet ist, welches sich längs der restlichen Mantelfläche der Zahnstange (1) erstreckt und diesen vorgegebenen Oberflächenbereich der Zahnstange (1) härtet.

4. Induktor nach Anspruch 3,
**dadurch gekennzeichnet,**
**daß** der restlichen Mantelfläche der Zahnstange (1) zwei oder mehr, zueinander parallele Induktorelemente (2) zugeordnet sind.

5. Induktor nach einem der vorhergehenden Ansprüche,
**dadurch gekennzeichnet,**
**daß** die einzelnen Induktorelemente (2) durch Verbindungselemente (3) eine in sich mechanisch starre Baueinheit bilden.

6. Induktor nach Anspruch 5,
**dadurch gekennzeichnet,**
**daß** die stabförmigen Induktorelemente (2) im wesentlichen gleich lang sind und daß direkt einander benachbarte Induktorelemente (2) endseitig durch querverlaufende Verbindungselemente (3) miteinander verbunden sind.

7. Induktor nach einem der vorhergehenden Ansprüche,
**dadurch gekennzeichnet,**
**daß** die Induktorelemente (2) elektrisch in Reihe oder elektrisch parallel geschaltet sind.

## Claims

1. Inductor for induction hardening of metallic, bar-shaped toothed rods (1), wherein the metal surface of the toothed rod (1) in the area of the teeth is substantially flat and the remaining casing surface of the toothed rod (1) is profiled in cross-section, and wherein the inductor is formed by at least one substantially bar-shaped inductor element (2) extending parallel to the longitudinal axis of the toothed rod (1), which inductor element extends over the entire length of the toothed rod (1) to be hardened along the casing surface with the teeth and hardens this specified surface area of the toothed rod (1),
**characterised in that**
both the toothed rod (1) and the inductor are arranged stationary during the hardening process.

2. Inductor according to the preceding claim, **characterised in that** allocated to the casing surface of the toothed rod (1) with the teeth are two or more mutually parallel inductor elements (2).

3. Inductor according to the preceding claim, **characterised in that** the inductor is formed by at least one further substantially bar-shaped inductor element (2) extending parallel to the longitudinal axis of the toothed rod (1), which inductor element extends along the remaining casing surface of the toothed rod (1) and hardens this specified surface area of the toothed rod (1).

4. Inductor according to claim 3, **characterised in that** allocated to the remaining casing surface of the toothed rod (1) are two or more mutually parallel inductor elements (2).

5. Inductor according to any of the preceding claims, **characterised in that** the individual inductor elements (2) form, through connecting elements (3), an inherently mechanically rigid component.

6. Inductor according to claim 5, **characterised in that** the bar-shaped inductor elements (2) are substantially of equal length and that directly adjacent inductor elements (2) are connected together at the end by transverse connecting elements (3).

7. Inductor according to any of the preceding claims, **characterised in that** the inductor elements (2) are connected electrically in series or in parallel.

## Revendications

1. Inducteur destiné à la trempe, par induction, de crémaillères métalliques (1) en forme de barres, la surface périphérique de la crémaillère (1) étant substantiellement plane dans la région des dents, et la partie restante de ladite surface périphérique de ladite crémaillère (1) étant profilée en coupe transversale, ledit inducteur étant constitué d'au moins un élément inducteur (2) sensiblement en forme de barre, qui s'étend parallèlement à l'axe longitudinal de la crémaillère (1), couvre toute la longueur de ladite crémaillère (1) dévolue à la trempe, le long de la surface périphérique munie des dents, et provoque la trempe de cette zone superficielle préétablie de ladite crémaillère (1),
**caractérisé par le fait**
**qu'**aussi bien la crémaillère (1), que l'inducteur, occupent des positions stationnaires au cours de l'opération de trempe.

2. Inducteur selon la revendication précédente,
**caractérisé par le fait**
**que** des éléments inducteurs (2) mutuellement parallèles, au nombre de deux ou plus, sont affectés à la surface périphérique de la crémaillère (1) qui est pourvue des dents.

3. Inducteur selon l'une des revendications précédentes,
**caractérisé par le fait**
**que** ledit inducteur est constitué d'au moins un élément inducteur supplémentaire (2) sensiblement en forme de barre, qui s'étend parallèlement à l'axe longitudinal de la crémaillère (1), le long de la partie restante de la surface périphérique de ladite crémaillère (1), et provoque la trempe de cette zone superficielle préétablie de ladite crémaillère (1).

4. Inducteur selon la revendication 3,
**caractérisé par le fait**
**que** des éléments inducteurs (2) mutuellement parallèles, au nombre de deux ou plus, sont affectés à la partie restante de la surface périphérique de la crémaillère (1).

5. Inducteur selon l'une des revendications précédentes,
**caractérisé par le fait**
**que** les éléments inducteurs (2) individuels forment, suite à la présence d'éléments de liaison (3), un ensemble structurel unitaire doué, en soi, de rigidité mécanique.

6. Inducteur selon la revendication 5,
**caractérisé par le fait**
**que** les éléments inducteurs (2) en forme de barres présentent des longueurs sensiblement identiques ; et
**que** des éléments inducteurs (2) directement voisins sont solidarisés, aux extrémités, par des éléments de liaison (3) s'étendant transversalement.

7. Inducteur selon l'une des revendications précédentes,
**caractérisé par le fait**
**que** les éléments inducteurs (2) sont branchés électriquement en série ou électriquement en parallèle.
